# EUROPÄISCHE PATENTSCHRIFT

(11) **EP 3 529 128 B1**
(45) Veröffentlichungstag und Bekanntmachung des Hinweises auf die Patenterteilung: **24.02.2021**
(21) Anmeldenummer: 17791324.1
(22) Anmeldetag: 18.10.2017
(51) Int. Cl.: B62D 1/19

(54) **LENKSÄULE MIT ADAPTIVER ENERGIEABSORPTIONSVORRICHTUNG FÜR EIN KRAFTFAHRZEUG**
STEERING COLUMN COMPRISING AN ADAPTIVE ENERGY ABSORPTION DEVICE FOR A MOTOR VEHICLE
COLONNE DE DIRECTION À DISPOSITIF D'ABSORPTION D'ÉNERGIE ADAPTATIF POUR UN VÉHICULE À MOTEUR

(30) Priorität: 19.10.2016 DE 102016220531
(43) Veröffentlichungstag der Anmeldung: 28.08.2019
(73) Patentinhaber: thyssenkrupp Presta AG, 9492 Eschen (LI); thyssenkrupp AG, 45143 Essen (DE)
(72) Erfinder: DOMIG, Markus, 6781 Bartholomäberg (AT)
(74) Vertreter: thyssenkrupp Intellectual Property GmbH
(86) Internationale Anmeldenummer: PCT/EP2017/076612
(87) Internationale Veröffentlichungsnummer: WO 2018/073304

(56) Entgegenhaltungen:
- EP-A1- 2 900 540
- WO-A1-2016/142482
- DE-A1-102011 015 140

## Beschreibung

Die Erfindung betrifft eine Lenksäule für ein Kraftfahrzeug, mit einem inneren Mantelrohr, das eine Lenkwelle drehbar lagert, und einer äußeren Manteleinheit, die mit dem Fahrzeugchassis verbindbar ist und in der das innere Mantelrohr in Axialrichtung verschiebbar aufgenommen und fixiert ist; mit einer wirkungsmäßig zwischen dem Mantelrohr und der Manteleinheit angeordneten Energieabsorptionsvorrichtung, in der ein Teil der im Crashfall auftretenden Energie absorbierbar ist, wenn das Mantelrohr gegenüber der Manteleinheit teleskopisch verschoben wird. Aus der DE 10 2011 015 140 A1 ist eine Lenksäule der eingangs genannten Art bekannt, bei der ein streifenförmiges Deformationselement durch eine Bremse mit einem verengten Abschnitt gezogen und dadurch deformiert wird. Dabei wird ein Teil der im Crashfall auftretenden Energie absorbiert und zur Deformation des Deformationselements verwendet. Nachteil dieser Lösung ist es, dass eine Anpassung des Betrags der zu absorbierenden Energie an variierende Bedingungen, wie beispielsweise die Fahrzeuggeschwindigkeit, Masse des Fahrzeugführers oder ob der Fahrzeugführer angegurtet ist oder nicht, des jeweiligen Crashfalls nicht möglich ist.

Aus der WO 2016/142482 A1 ist eine gattungsgemäße Lenksäule bekannt, die ein oder mehrere Deformationselemente aufweist. Dadurch kann die Energieabsorption eingestellt werden. Durch die darin beschriebenen Biegeelemente kann der Bauraumbedarf jedoch nur in begrenztem Maße verringert und angepasst werden.

Aufgabe der Erfindung ist es, eine gattungsgemäße Lenksäule mit Energieabsorptionsvorrichtung zu verbessern, sodass die Menge an der zu absorbierenden Energie im Crashfall an die gegebenen Umstände angepasst werden kann. Des Weiteren soll die adaptive Energieabsorptionsvorrichtung nur einen geringen Bauraumbedarf aufweisen.

Gelöst wird die Aufgabe durch die Merkmale des Patentanspruchs 1.

Vorteilhafte Ausgestaltungsformen ergeben sich aus den Unteransprüchen.

Die erfindungsgemäße Lösung sieht vor, dass die Energieabsorptionsvorrichtung mindestens zwei auf dem Mantelrohr befestigte Verformungsstreifen aufweist, auf denen jeweils ein mit der Manteleinheit verbundener Deformationsschlitten angeordnet ist, der die äußere Schmalseite des jeweiligen Verformungsstreifens umgreift und eingeklemmt, dass dieser den jeweiligen Verformungsstreifen verformt, wenn im Crashfall der Verformungsstreifen in Axialrichtung relativ zum Deformationsschlitten verschoben wird, und dass eine Verbindung zwischen einem ersten Deformationsschlitten und der Manteleinheit oder zwischen dem ersten Deformationselement und einem zweiten Deformationselement mittels einer Schaltvorrichtung auskoppelbar oder einkoppelbar ist.

Durch die erfindungsgemäße Maßnahme, dass ein Deformationsschlitten mittels einer Schaltvorrichtung auskoppelbar oder einkoppelbar ist, können im Crashfall bei eingekoppelter Schaltvorrichtung beide Verformungsstreifen oder bei ausgekoppelter Schaltvorrichtung nur der zweite Verformungsstreifen verformt werden. Bei der Verformung von beiden Verformungsstreifen wird mehr Energie absorbiert als in dem Fall, dass nur der zweite Verformungsstreifen verformt wird. Hierdurch kann die im Crashfall absorbierte Energie an die Umstände des Crashs angepasst werden, beispielsweise an das Gewicht des auf das Lenkrad aufprallenden Fahrers oder an den Umstand, ob der Fahrer angegurtet ist oder nicht.

In einer bevorzugten Ausführungsform ist die Schaltvorrichtung ein pyrotechnischer Schalter. Dieser kann im Crashfall entweder ausgelöst werden oder nicht. Pyrotechnische Schalter benötigen nur einen kleinen Bauraum und schalten sehr schnell. Alternativ ist es ebenfalls denkbar und möglich, als Schaltvorrichtung einen Hubmagneten (Solenoid) einzusetzen.

Eine vorteilhafte Ausgestaltungsform der Erfindung sieht weiter vor, dass die Deformationsschlitten über eine Zahnplatte mit der äußeren Manteleinheit verbunden sind, wobei ein mit Zähnen versehenes Arretierelement mit der äußeren Manteleinheit über eine Zuspannvorrichtung verbunden ist, die das Arretierelement gegen die Zahnplatte drückt, um diese im Fahrbetrieb an der Manteleinheit unverrückbar zu fixieren, so dass eine Verschiebung des Mantelrohrs gegenüber der Manteleinheit im Crashfall nur unter Betätigung der Energieabsorptionsvorrichtung möglich ist. Diese Anordnung benötigt besonders wenig Bauraum.

Unter dem, dass das Arretierelement gegen die Zahnplatte gedrückt ist, ist zu verstehen, dass das Arretierelement und die Zahnplatte sich in Eingriff miteinander befinden. Es ist dafür nicht notwendig, dass eine Kraft das Arretierelement in Richtung der Zahnplatte vorspannt.

Die Zuspannvorrichtung kann bevorzugt eine erste Hubscheibe und eine zweite Hubscheibe umfassen, wobei die erste Hubscheibe mit einem Betätigungshebel und einem Spannbolzen drehfest verbunden ist und mit der zweiten Hubscheibe zusammenwirkt, wobei bei einer Verdrehung der ersten Hubscheibe gegenüber der zweiten Hubscheibe mittels des Betätigungshebels ein Klemmhub in Richtung der Spannachse bereitgestellt wird. Die zweite Hubscheibe ist mit dem Arretierteil gekoppelt. Bevorzugt weist die erste Hubscheibe einen Nockenabschnitt auf. Die zweite Hubscheibe weist bevorzugt ein Kulissenkontur auf, die mit dem Nockenabschnitt zusammenwirken kann.

Die Zuspannvorrichtung ist mittels eines Betätigungshebels entweder zu gespannt oder gelöst, auch Fixierstellung und Freigabestellung genannt. Im gelösten Zustand (Freigabestellung) der Zuspannvorrichtung kann einerseits das Mantelrohr gegenüber der Manteleinheit teleskopiert werden. Im gespannten Zustand (Fixierstellung) ist das Mantelrohr gegenüber der Manteleinheit festgesetzt, so dass eine Verschiebung des Mantelrohrs gegenüber der Manteleinheit nur dann möglich ist, wenn eine Kraft in die Lenkwelle eingetragen wird, die eine vorbestimmte Losbrechkraft überschreitet. Mit anderen Worten kann das Mantelrohr in die Manteleinheit im Crashfall unter Energieaufnahme durch die Energieabsorptionsvorrichtung hinein teleskopieren. Im Normalbetrieb ist die Zuspannvorrichtung in der Fixierstellung, in der die Anpassung der Lenkwellenposition, d.h. die Verstellung des Mantelrohrs zur Manteleinheit verhindert ist.

In einer Ausführungsform ist es alternativ zu einer manuellen Verstellung möglich, dass das Mantelrohr und die Manteleinheit mittels eines motorischen Antriebs zueinander teleskopierbar ist. Die Fixierbarkeit des Mantelrohrs zu der Manteleinheit wird durch den Stillstand des motorischen Antriebs und in einer vorteilhaften Ausführungsform durch ein selbsthemmendes Getriebe realisiert.Die Erfindung wird hinsichtlich des Bauraumbedarfs noch verbessert, wenn die Verformungsstreifen übereinanderliegend angeordnet sind, wobei ein näher am Mantelrohr liegender zweiter Verformungsstreifen bevorzugt breiter als der auf dem zweiten Verformungsstreifen angeordnete erste Verformungsstreifen ausgebildet ist, wobei der auf dem zweiten Verformungsstreifen angeordnete zweite Deformationsschlitten bevorzugt breiter als der auf dem ersten Verformungsstreifen angeordnete erste Deformationsschlitten ist, so dass er beide Verformungsstreifen umgreift, jedoch nur den zweiten Verformungsstreifen einklemmt, und wobei der erste Deformationsschlitten nur den ersten Verformungsstreifen umgreift und eingeklemmt.

Bei dieser Bauform sind beide Verformungsstreifen auf derselben Seite des Mantelrohrs angeordnet und sie benötigen geringfügig mehr Bauraum als eine Energieabsorptionsvorrichtung mit einem einzigen Verformungsstreifen. Dennoch verformt der erste Deformationsschlitten nur den ersten Verformungsstreifen und der zweite Deformationsschlitten nur den zweiten Verformungsstreifen, wenn die Schaltvorrichtung eingekoppelt ist. Die beiden Deformationsschlitten können bevorzugt in Axialrichtung hintereinander angeordnet sein. Im Crashfall werden entweder beide Deformationsschlitten über beide Verformungsstreifen gezogen oder nur der zweite Deformationsschlitten über den zweiten Verformungsstreifen, wenn die Schaltvorrichtung vorher ausgekoppelt worden ist. Der erste Verformungsstreifen verbleibt in einem unverformten Zustand.

Mit Vorteil sind die Verformungsstreifen durch Abstandhalter im Abstand zueinander gehalten und zwischen dem Mantelrohr und der Zahnplatte in radialer Richtung fixiert. Dies verhindert ein Verbiegen und Herausrutschen der Verformungsstreifen aus den jeweiligen Deformationsschlitten und gewährleistet eine ungestörte Funktion, wenn einer oder beide Verformungsstreifen verformt sind.

Mit Vorteil sind die Abstandhalter am zweiten Verformungsstreifen angeordnet. So können sie zusammen mit dem zweiten Verformungsstreifen in einem einzigen Arbeitsschritt montiert werden. In vorteilhafter Ausgestaltung sind die Abstandhalter sowohl auf der dem ersten Verformungsstreifen zugewandten Oberseite als auch auf der dem Mantelrohr zugewandten Unterseite des zweiten Verformungsstreifens angeordnet. Dabei wird der zweite Verformungsstreifen nicht nur gegenüber dem ersten Verformungsstreifen sondern auch gegenüber dem Mantelrohr im Abstand gehalten und geführt. In einer vorteilhaften und einfach herzustellenden Ausführungsform sind die Abstandhalter als Noppen oder Steg ausgestaltet und in den zweiten Verformungsstreifen eingeformt.

In einer vorteilhaften Weiterbildung ist der Verformungsstreifen und die Abstandshalter ein einstückiges integrales Bauteil.

Ein Ausführungsbeispiel der Erfindung wird nachfolgend anhand der Zeichnungen näher erläutert. Die Figuren zeigen im Einzelnen:
- Figur 1: :eine perspektivische Darstellung einer erfindungsgemäßen Lenksäule mit variabel schaltbarer Energieabsorptionsvorrichtung;
- Figur 2:: eine perspektivische Darstellung des inneren Mantelrohrs mit Energieabsorptionsvorrichtung und Zuspannvorrichtung;
- Figur 3:: eine Explosionsdarstellung der erfindungsgemäßen Energieabsorptionsvorrichtung am Mantelrohr;
- Figur 4:: eine Explosionsdarstellung ähnlich Figur 3, aber aus einem anderen Blickwinkel;
- Figur 5:: eine perspektivische Teilansicht einer teilweise demontierten Energieabsorptionsvorrichtung;
- Figur 6:: eine geschnittene Darstellung eines Mantelrohrs mit darauf montierter Energieabsorptionsvorrichtung;
- Figur 7:: eine perspektivische Darstellung eines Mantelrohrs mit erfindungsgemäßer Energieabsorptionsvorrichtung vor dem Crash;
- Figur 8:: eine perspektivische Darstellung ähnlich Figur 7 einer erfindungsgemäßen Energieabsorptionsvorrichtung nach einem Crash, bei dem zwei Verformungsstreifen verformt wurden;
- Figur 9:: eine perspektivische Darstellung ähnlich Figur 8 einer erfindungsgemäßen Energieabsorptionsvorrichtung nach einem Crash, bei dem nur der zweite Verformungsstreifen verformt wurde;
- Figur 10:: einen Längsschnitt eines Details einer auf einem Mantelrohr montierten erfindungsgemäßen Energieabsorptionsvorrichtung in einer alternativen Ausführungsform mit Abstandhaltern zwischen dem ersten und zweiten Verformungsstreifen.

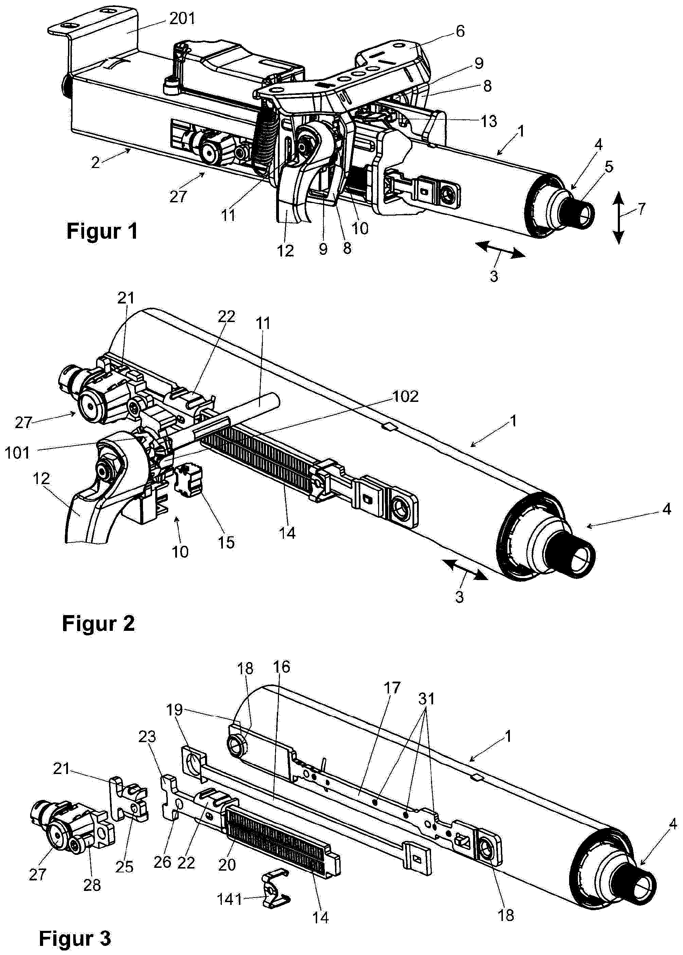

In Figur 1 zeigt eine erfindungsgemäße Lenksäule, bei der ein inneres Mantelrohr 1 in einer äußeren Manteleinheit 2 in Axialrichtung 3 längsverschieblich gelagert ist. Im Mantelrohr 1 ist eine Lenkwelle 4 drehbar gelagert, an deren dem Fahrer des Kraftfahrzeugs zugewandten Ende 5 ein nicht gezeigtes Lenkrad montierbar ist. Die Manteleinheit 2 ist über einen Halter 6 mit dem nicht gezeigten Fahrzeugchassis verbindbar. Der Halter 6 ist am Fahrzeugchassis mittels Befestigungsmittel fixierbar, während die Manteleinheit 2 gegenüber dem Halter 6 in Vertikalrichtung 7 schwenkbar gelagert ist.

Für die schwenkbare Lagerung ist der Halter 6 mit zwei die Manteleinheit 2 umgreifenden Klemmbacken 8 versehen, die als Langloch ausgebildeten Vertikalschlitze 9 aufweisen. Die Manteleinheit 2 umfasst einen Befestigungsabschnitt 201, der mit dem Fahrzeugchassis verbindbar ist und sich durch eine Verstellung in Vertikalrichtung 7 elastisch verformt. Eine Zuspannvorrichtung 10 ist mit einem Spannbolzen 11 versehen, der durch die Vertikalschlitze 9 der Klemmbacken 8 und durch zwei Bohrungen 13 der Manteleinheit 2 hindurch geht. Die Zuspannvorrichtung 10 umfasst einen als Nockenscheibe ausgebildete erste Hubscheibe 101 und einer als Kulissenscheibe ausgebildeten zweiten Hubscheibe 102, wobei die zweite Hubscheibe eine Kurvenbahn 103 aufweist. Die ersten Hubscheibe 101 ist mit einem Betätigungshebel 12 und dem Spannbolzen 11 drehfest verbunden. Die Zuspannvorrichtung 10 wird mittels des Betätigungshebels 12 entweder zu gespannt oder gelöst, in dem die erste Hubscheibe 101 gegenüber der zweiten Hubscheibe 102 um die Achse des Spannbolzens 11 verdreht wird. Im gelösten Zustand (Freigabestellung) der Zuspannvorrichtung 10 kann einerseits das Mantelrohr 1 gegenüber der Manteleinheit 2 in Axialrichtung 3 verschoben werden und andererseits die Manteleinheit 2 gegenüber dem Halter 6 in Vertikalrichtung 7 verschwenkt werden. Hierdurch wird eine Längsverstellung des Lenkrads in Axialrichtung 3 und eine Höhenverstellung des Lenkrads in Vertikalrichtung 7 ermöglicht. Im zugespannten Zustand (Fixierstellung) der Zuspannvorrichtung 10 wird sowohl das Mantelrohr 1 in der Manteleinheit 2 als auch die Manteleinheit 2 im Halter 6 festgeklemmt, so dass die Lenksäule fixiert ist und keine Höhenverstellung oder Längsverstellung des Lenkrads mehr möglich ist.

Wie man am besten in Figur 2 erkennt, ist das Mantelrohr 1 mit einer in Axialrichtung 3 ausgerichteten Zahnplatte 14 versehen. Ein durch die Zuspannvorrichtung 10 an die Zahnplatte 14 andrückbares Arretierelement 15, welches mit der zweiten Hubscheibe 102 wirkverbunden ist, ist ebenfalls mit Zähnen versehen. Wenn im zugespannten Zustand der Zuspannvorrichtung 10 das Arretierelement 15 an die Zahnplatte 14 angepresst wird, greifen die Zähne des Arretierelements 15 und die Zähne der Zahnplatte 14 ineinander, sodass die Zahnplatte 14 gegenüber dem Halter 6 unverrückbar fixiert ist. Eine Verschiebung der Zahnplatte 14 gegenüber dem Halter 6 in Axialrichtung 3 ist dann nicht mehr möglich.

Um das Mantelrohr 1 gegenüber der Manteleinheit 2 im Normalbetrieb des Fahrzeugs in Axialrichtung 3 zu verschieben, muss über den Betätigungshebel 12 die Zuspannvorrichtung 10 gelöst werden,d.h. von der Fixierstellung in die Freigabestellung überführt werden, wobei das Arretierelement 15 von der Zahnplatte 14 abhebt und eine Verschiebung der Zahnplatte 14 in Axialrichtung 3 gegenüber dem Arretierelement 15 möglich ist. Das Arretierelement 15 selbst kann gegenüber dem Halter 6 und der Manteleinheit 2 in Axialrichtung 3 nicht verschoben werden, da der Spannbolzen 11 durch die Vertikalschlitzen 9 an einer solchen Verschiebung gehindert wird. Der Spannbolzen 11 kann allerdings in den Vertikalschlitzen 9 in Vertikalrichtung 7 verschoben werden. Hierdurch wird die Manteleinheit 2 mit dem darin angeordneten Mantelrohr 1 in Vertikalrichtung 7 verschwenkt. Zusammen mit dem Mantelrohr 1 und der Manteleinheit 2 wird auch die Zuspannvorrichtung 10 mit dem Spannbolzen 11, dem Betätigungshebel 12 und dem Arretierelement 15 in Vertikalrichtung 7 verschwenkt, so dass das Arretierelement 15 stets im Bereich der Zahnplatte 14 verbleibt.

Wie man am besten in den Figuren 3 bis 6 erkennt, sind auf dem Mantelrohr 1 zwei in Axialrichtung 3 ausgerichtete Verformungsstreifen 16, 17 angeordnet, wobei ein erster Verformungsstreifen 16 über dem zweiten Verformungsstreifen 17 angeordnet ist. Der zweite Verformungsstreifen 17 ist direkt auf der Oberfläche des Mantelrohrs 1 angeordnet. Zur Befestigung am Mantelrohr 1 ist dieses mit Befestigungselementen 18 versehen, die über die Oberfläche des Mantelrohrs 1 hinaus und durch korrespondierende Öffnungen 19 an den Enden der Verformungsstreifen 16, 17 ragen.

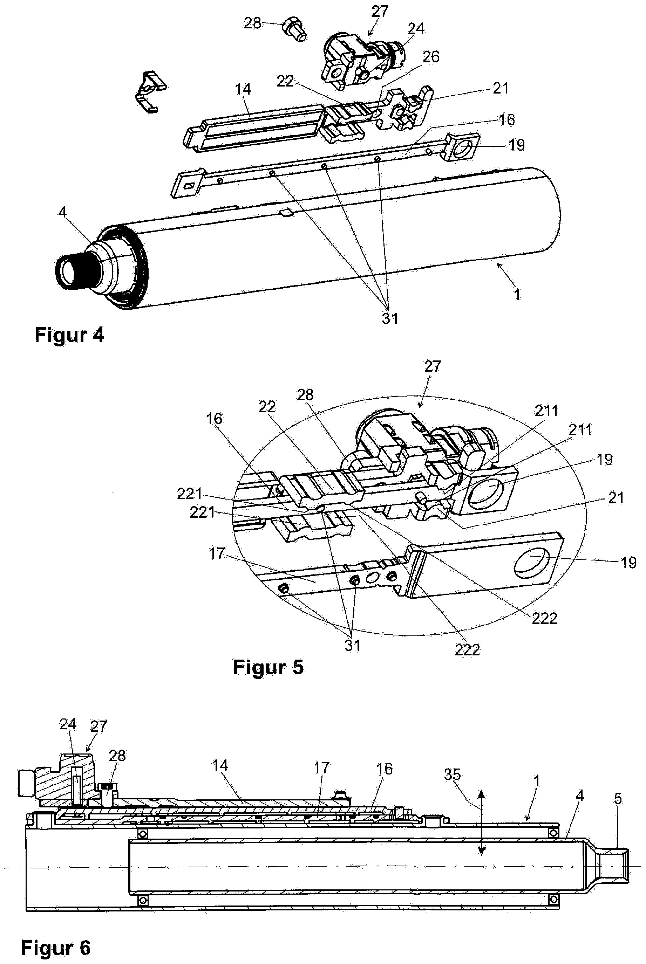

Die Zahnplatte 14 ist an ihrem in Fahrtrichtung des Fahrzeugs liegenden Ende 20 mit zwei Deformationsschlitten 21, 22 verbunden, wobei ein erster Deformationsschlitten 21 auskoppelbar ist. Eine Koppelschiene 23 verbindet das Ende 20 der Zahnplatte 14 mit den beiden Deformationsschlitten 21, 22, wobei die Verbindung der Zahnplatte 14 zum zweiten Deformationsschlitten 22 fest und untrennbar ist und die Verbindung zum ersten Deformationsschlitten 21 auskoppelbar ausgestaltet ist. Die Zahnplatte 14 und der zweite Deformationsschlitten 22 sind als einstückiges integrales Bauteil ausgebildet. Die Zahnplatte 14 und der zweite Deformationsschlitten 22 kann sowohl als Umformbauteil oder als Sinterbauteil ausgebildet sein. Eine Klammerfeder 141 dient als Niederhalter und befestigt die Zahnplatte 14 auf der dem ersten Deformationsschlitten 22 abgewandten Seite an dem zweiten Verformungsstreifen 17, so dass ein radiales Abheben der Zahnplatte 14 im Crashfall verhindert wird. Die Kopplung des ersten Deformationsschlittens 21 an die Koppelschiene 23 erfolgt mittels eines Koppelbolzens 24 (siehe Figur 6), der in eine Bohrung 25 des ersten Deformationsschlittens 21 einführbar ist. In einer Bohrung 26 der Koppelschiene 23 ist ein pyrotechnischer Schalter 27 mittels eines Befestigungsbolzens 28 befestigt. Der Koppelbolzen 24 ragt im Normalfall durch die Bohrung 25 des ersten Deformationsschlittens 21. Durch Betätigung des pyrotechnischen Schalters 27 kann der Koppelbolzen 24 aus der Bohrung 25 des ersten Deformationsschlittens 21 herausgezogen werden, so dass der erste Deformationsschlitten 21 von der Koppelschiene 23 entkoppelt ist.Wenn beispielsweise im Crashfall der Fahrer auf das Lenkrad aufprallt, wirken auf das Lenkrad und damit auf die Lenkwelle 4 und das Mantelrohr 1 in Fahrtrichtung sehr hohe Kräfte, die eine Verschiebung des Mantelrohrs 1 gegenüber der Manteleinheit 2 in Axialrichtung 3 bei geschlossener Zuspannvorrichtung 10 verursachen können. Da die Zahnplatte 14 über das Arretierelement 15 mittels der Zuspannvorrichtung 10 unverrückbar mit der Manteleinheit 2 verbunden ist, kann diese sich nicht in Axialrichtung 3 bewegen. Dasselbe gilt für den mit der Zahnplatte 14 unlösbar verbundenen zweiten Deformationsschlitten 22 und auch für den ersten Deformationsschlitten 21, wenn er über den pyrotechnischen Schalter 27 und den Koppelbolzen 24 mit der Koppelschiene 23 verbunden ist. Wenn im Crashfall das Mantelrohr 1 mit hoher Kraft zwangsweise gegenüber der Manteleinheit 2 in Axialrichtung 3 verschoben wird, nimmt es die beiden fest mit dem Mantelrohr 1 verbundenen Verformungsstreifen 16, 17 mit. Da andererseits die beiden Deformationsschlitten 21, 22 gegenüber der Manteleinheit 2 nicht verschoben werden können, werden sie über die zugehörigen Verformungsstreifen 16, 17 gezogen und verformen diese dabei. Die für die Verformung der Verformungsstreifen 16, 17 aufzuwendende Verformungsenergie wird somit aus der Bewegungsenergie absorbiert. Dabei wird das Mantelrohr 1 und über die Lenkwelle 4 und das Lenkrad der aufprallende Fahrer in dem Maße abgebremst als die Bewegungsenergie in beiden Verformungsstreifen 16, 17 absorbiert wird.

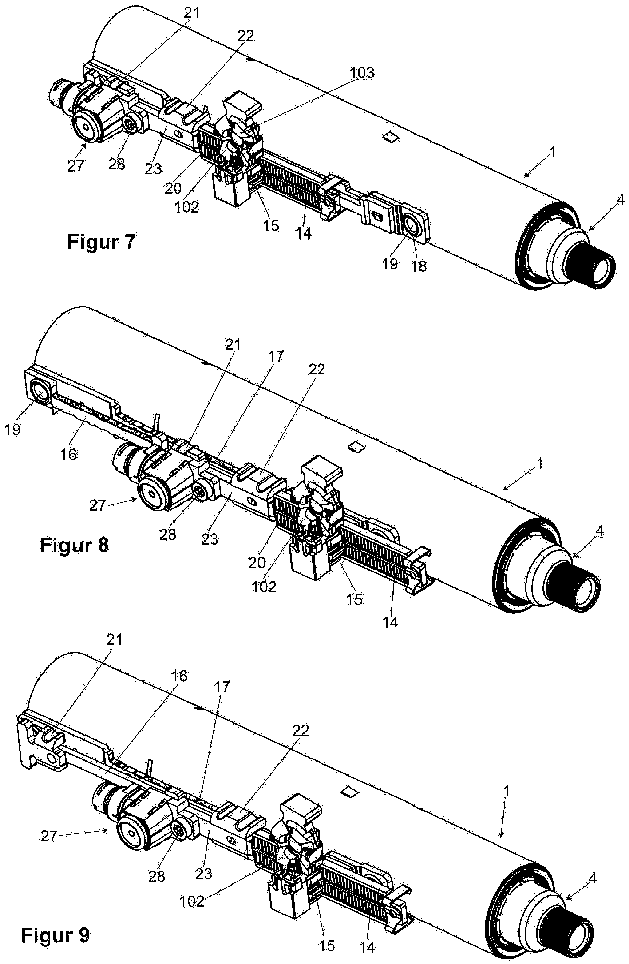

Wenn im Crashfall andere Umstände auftreten, beispielsweise weil der Fahrer mit dem Sicherheitsgurt gesichert d.h. angegurtet ist, so wird der Aufprall des Fahrers auf das Lenkrad weniger hart ausfallen und durch die Energieabsorptionsvorrichtung muss weniger Energie absorbiert werden. In diesem Fall wird der pyrotechnische Schalter 27 betätigt, der den Koppelbolzen 24 aus der Bohrung 25 des ersten Deformationsschlittens 21 heraus zieht. Wenn in diesem Fall das Mantelrohr 1 wiederum unter den im Crashfall auftretenden Kräften gegenüber der Manteleinheit 2 in Axialrichtung 3 verschoben wird, wird der abgekoppelte erste Deformationsschlitten 21 nicht gegenüber dem ersten Verformungsstreifen 16 bewegt, sondern bleibt an seinem Platz, den dieser vor dem Crash einnahm. Lediglich der zweite Deformationsschlitten 22, der unlösbar mit der Koppelschiene 23 und der Zahnplatte 14 verbunden ist, wird über den zweiten Verformungsstreifen 17 gezogen. Diese Situation ist in Figur 9 dargestellt.

In diesem Fall wird also lediglich der zweite Verformungsstreifen 17 verformt, der erste Verformungsstreifen 16 bleibt unverformt. Zur Verformung eines einzigen Verformungsstreifens 17 wird weniger Verformungsenergie benötigt als im anderen Fall, wo zwei Verformungsstreifen 16, 17 verformt werden müssen. Daher absorbiert auch die Verformung eines einzigen Verformungsstreifens 17 weniger Bewegungsenergie als die Verformung von zwei Verformungsstreifen 16, 17. Folglich führt die Betätigung des pyrotechnischen Schalters 27 vor dem Verschieben des Mantelrohrs 1 gegenüber der Manteleinheit 2 dazu, dass bei der Verschiebung in Axialrichtung 3 durch die erfindungsgemäße Energieabsorptionsvorrichtung weniger Bewegungsenergie absorbiert wird als im Falle ohne Betätigung des pyrotechnischen Schalters 27. Die im Crashfall absorbierte Bewegungsenergie kann daher an die jeweils vorgefundenen Umstände des Crashfalls angepasst werden.

Die erfindungsgemäße adaptive Energieabsorptionsvorrichtung benötigt nur sehr wenig Bauraum, weil die Verformungsstreifen 16, 17 und die Zahnplatte 14 direkt übereinanderliegend auf derselben Seite der Oberfläche des Mantelrohrs 1 angeordnet sind. Damit der erste Deformationsschlitten 21 nur den ersten Verformungsstreifen 16 und der zweite Deformationsschlitten 22 nur den zweiten Verformungsstreifen 17 verformt, ist der näher am Mantelrohr 1 liegende zweite Verformungstreifen quer zur Axialrichtung 3 breiter ausgestaltet als der erste Verformungsstreifen 16. Der erste Deformationsschlitten 21 umfasst mit seinen kurzen Flanken lediglich den ersten Verformungsstreifen 16. Dabei klemmen die kurzen Flanken des ersten Deformationsschlittens 21 die Schmalseiten des ersten Verformungsstreifens 16 ein, dass sie den ersten Verformungsstreifen 16 verformen, sobald der erste Deformationsschlitten 21 in Axialrichtung 3 über den ersten Verformungsstreifen 16 gezogen wird. Der erste Deformationsschlitten 21 umfasst bolzenartige Vorsprünge 211, die mit den Schmalseiten des Verformungsstreifen 16 zusammenwirken und diesen im Fall einer Relativbewegung deformieren. Die Vorsprünge 211 sind zueinander beabstandet, wobei der Abstand zwischen den Vorsprüngen 211 geringer ist als die Breite des Verformungsstreifens 16, d.h. die Breite der Schmalseiten des Verformungsstreifens 17. Die bolzenartigen Vorsprünge 211 weisen eine abgerundete Oberfläche auf.

Der zweite Deformationsschlitten 22 ist quer zur Axialrichtung 3 breiter ausgestaltet und seine längeren Flanken erreichen den unter dem ersten Verformungsstreifen 16 liegenden breiteren zweiten Verformungsstreifen 17, so dass der zweite Deformationsschlitten 22 mit seinen längeren Flanken die Schmalseiten des zweiten Verformungsstreifens 17 so fest einklemmt, dass er den zweiten Verformungsstreifen 17 verformt, sobald der zweite Deformationsschlitten 22 über den zweiten Verformungsstreifen 17 gezogen wird.

Dabei umfasst der zweite Deformationsschlitten 22 auch den ersten Verformungsstreifen 16. Da der zweite Deformationsschlitten 22 aber breiter ist als der erste Deformationsschlitten 21 umklammern die Flanken des zweiten Deformationsschlittens 22 nicht die Schmalseiten des ersten Verformungsstreifens 16. Deshalb wird der erste Verformungsstreifen 16 nicht verformt wenn der zweite Deformationsschlitten 22 in Axialrichtung 3 darüber gezogen wird.

Der zweite Deformationsschlitten 22 umfasst ein erstes Paar bolzenartige Vorsprünge 221 und ein zweites Paar bolzenartige Vorsprünge 222, die mit den Schmalseiten des Verformungsstreifen 17 zusammenwirken und diesen deformieren. Die Vorsprünge 221 bzw. die Vorsprünge 222 sind zueinander beabstandet, wobei der Abstand zwischen den Vorsprüngen 221 bzw. den Vorsprüngen 222 geringer ist als die Breite des Verformungsstreifens 17, d.h. die Breite der Schmalseiten des Verformungsstreifens 17. Die bolzenartigen Vorsprünge 221 und die bolzenartigen Vorsprünge 222 weisen eine abgerundete Oberfläche auf. Es kann vorgesehen sein, dass der Abstand der zweiten Vorsprünge 222 zueinander geringer, gleich oder größer ist als der Abstand des ersten Vorsprünge 221 zueinander. Dadurch lassen sich die Crasheigenschaften konstruktiv einstellen.

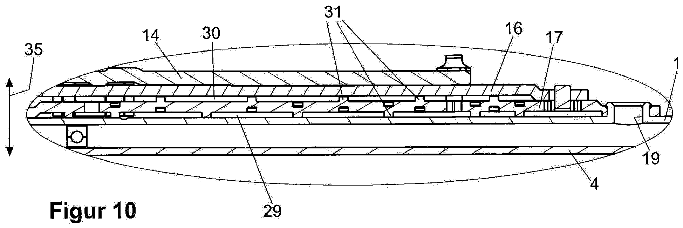

Wie man in der Figur 10 erkennt, ist es in einer alternativen Ausführungsform möglich, dass der zweite Verformungsstreifen 17 sowohl an seiner dem Mantelrohr 1 zugewandten Unterseite 29 als auch auf seiner dem ersten Verformungsstreifen 16 zugewandten Oberseite 30 jeweils mit Noppen 31 versehen ist, die als Abstandhalter dienen. Durch diese Maßnahme ist es möglich, die beiden Verformungsstreifen 16, 17 direkt übereinanderliegend auf dem Mantelrohr 1 anzuordnen. Dies ermöglicht eine besonders kompakte Bauform. Durch die Noppen 31 wird sichergestellt, dass sich die Verformungstreifen nicht derart verbiegen, dass sie aus den jeweiligen Deformationsschlitten herausrutschen. Außerdem wird so Raum für die Verformungen der Schmalseiten der Verformungsstreifen 16, 17 zur Verfügung gestellt, so dass gegenseitige Beeinträchtigungen ihrer Funktionen vermieden werden.

Die Erfindung erlaubt eine besonders kompakte Bauform, die mit geringen Fertigungskosten verbunden ist und dennoch eine zuverlässige Funktion der Energieabsorptionsvorrichtung in beiden Schaltzuständen gewährleistet.

### BEZUGSZEICHEN

- 1: Mantelrohr
- 2: Manteleinheit
- 3: Axialrichtung
- 4: Lenksäule
- 5: Ende
- 6: Halter
- 7: Vertikalrichtung
- 8: Klemmbacken
- 9: Vertikalschlitze
- 10: Zuspannvorrichtung
- 11: Spannbolzen
- 12: Betätigungshebel
- 13: Bohrung
- 14: Zahnplatte
- 15: Arretierelement
- 16: erster Verformungsstreifen
- 17: zweiter Verformungsstreifen
- 18: Befestigungselement
- 19: Öffnung
- 20: Ende
- 21: erster Deformationsschlitten
- 22: zweiter Deformationsschlitten
- 23: Koppelschiene
- 24: Koppelbolzen
- 25: Bohrung
- 26: Bohrung
- 27: Schalter
- 28: Befestigungsbolzen
- 29: Unterseite
- 30: Oberseite
- 31: Noppen / Abstandhalter
- 35: radiale Richtung

## Patentansprüche

1. Lenksäule für ein Kraftfahrzeug, mit einem inneren Mantelrohr (1), das eine Lenkwelle (4) drehbar lagert, und einer äußeren Manteleinheit (2), die mit dem Fahrzeugchassis verbindbar ist und in der das innere Mantelrohr (1) in Axialrichtung (3) verschiebbar aufgenommen und fixierbar ist; mit einer wirkungsmäßig zwischen dem Mantelrohr (1) und der Manteleinheit (2) angeordneten Energieabsorptionsvorrichtung (16, 17, 21, 22, 27), in der ein Teil der im Crashfall auftretenden Energie absorbierbar ist, wenn das Mantelrohr (1) gegenüber der Manteleinheit (2) teleskopisch verschoben wird, **dadurch gekennzeichnet, dass** die Energieabsorptionsvorrichtung (16, 17, 21, 22, 27) mindestens zwei auf dem Mantelrohr (1) befestigte Verformungsstreifen (16, 17) aufweist, auf denen jeweils ein mit der Manteleinheit (2) verbundener Deformationsschlitten (21, 22)angeordnet ist, der die äußeren Schmalseiten des jeweiligen Verformungsstreifens (16, 17) umgreift und einklemmt, dass dieser den jeweiligen Verformungsstreifen (16, 17) verformt, wenn im Crashfall der Verformungsstreifen (16, 17) in Axialrichtung (3) relativ zum Deformationsschlitten (21, 22) verschoben wird, und dass eine Verbindung (23, 24) zwischen einem ersten Deformationsschlitten (21) und der Manteleinheit (2) oder zwischen dem ersten Deformationselement (21) und einem zweiten Deformationselement (22) mittels einer Schaltvorrichtung (27) auskoppelbar oder einkoppelbar ist.

2. Lenksäule nach Anspruch 1, **dadurch gekennzeichnet, dass** die Schaltvorrichtung ein pyrotechnischer Schalter (27) ist.

3. Lenksäule nach Anspruch 1 oder 2, **dadurch gekennzeichnet, dass** die Deformationsschlitten (21, 22) über eine Zahnplatte (14) mit der äußeren Manteleinheit (2) verbunden sind, dass ein mit Zähnen versehenes Arretierelement (15) mit der äußeren Manteleinheit (2) über eine Zuspannvorrichtung (10) verbunden ist, die das Arretierelement (15) gegen die Zahnplatte (14) drückt, um diese im Fahrbetrieb an der Manteleinheit (2) unverrückbar zu fixieren, so dass eine Verschiebung des Mantelrohrs (1) gegenüber der Manteleinheit (2) im Crashfall nur unter Betätigung der Energieabsorptionsvorrichtung (16, 17, 21, 22, 27) möglich ist.

4. Lenksäule nach einem der vorhergehenden Ansprüche, **dadurch gekennzeichnet, dass** die Verformungsstreifen (16, 17) übereinanderliegend angeordnet sind, wobei ein näher am Mantelrohr (1) liegender zweiter Verformungsstreifen (17) breiter als der auf dem zweiten Verformungsstreifen (17) angeordnete erste Verformungsstreifen (16) ausgebildet ist, dass der auf dem zweiten Verformungsstreifen (17) angeordnete zweite Deformationsschlitten (22) breiter als der auf dem ersten Verformungsstreifen (16) angeordnete erste Deformationsschlitten (21) ist, so dass dieser beide Verformungsstreifen (16, 17) umgreift, jedoch nur den zweiten Verformungsstreifen (17) einklemmt; und dass der erste Deformationsschlitten (21) nur den ersten Verformungsstreifen (16) umgreift und einklemmt.

5. Lenksäule nach Anspruch 4, **dadurch gekennzeichnet, dass** die Verformungsstreifen (16, 17) durch Abstandhalter (31) im Abstand zueinander gehalten und zwischen dem Mantelrohr (1) und der Zahnplatte (14) in radialer Richtung (35) fixiert sind.

6. Lenksäule nach Anspruch 5, **dadurch gekennzeichnet, dass** die Abstandhalter (31) am zweiten Verformungsstreifen (17) angeordnet sind.

7. Lenksäule nach Anspruch 5, **dadurch gekennzeichnet, dass** die Abstandhalter (31) sowohl auf der dem ersten Verformungsstreifen (16) zugewandten Oberseite (30) als auch auf der dem Mantelrohr (1) zugewandten Unterseite (29) des zweiten Verformungsstreifens (17) angeordnet sind.

8. Lenksäule nach einem der Ansprüche 5 bis 7, **dadurch gekennzeichnet, dass** die Abstandhalter als Noppen (31) oder Steg ausgestaltet und in den zweiten Verformungstreifen (17) eingeformt sind.

## Claims

1. A steering column for a motor vehicle, having an inner casing tube (1) which rotatably mounts a steering shaft (4), and an outer casing unit (2) which is capable of being connected to the vehicle chassis and in which the inner casing tube (1) is received so as to be displaceable and fixable in the axial direction (3); having an energy absorption device (16, 17, 21, 22, 27) which is operatively disposed between the casing tube (1) and the casing unit (2) and in which part of the energy arising in the event of a crash is capable of being absorbed when the casing tube (1) is telescopically displaced in relation to the casing unit (2), **characterized in that** the energy absorption device (16, 17, 21, 22, 27) comprises at least two deformation strips (16, 17) which are fastened to the casing tube (1) and on which in each case one deformation slide (21, 22) which is connected to the casing unit (2) and which encompasses and jams the external narrow sides of the respective deformation strip (16, 17) is disposed, **in that** said deformation slide (21, 22) deforms the respective deformation strip (16, 17) when the deformation strip (16, 17) in the crash event is displaced in the axial direction (3) relative to the deformation slide (21, 22), and **in that** a connection (23, 24) between a first deformation slide (21) and the casing unit (2), or between the first deformation element (21) and a second deformation element (22), is capable of being coupled or decoupled by means of a switching device (27).

2. The steering column as claimed in claim 1, **characterized in that** the switching device is a pyrotechnical switch (27).

3. The steering column as claimed in claim 1 or 2, **characterized in that** the deformation slides (21, 22) are connected to the outer casing unit (2) by way of a rack plate (14), **in that** an arrestor element (15) provided with teeth is connected to the outer casing unit (2) by way of a tightening device (10) which pushes the arrestor element (15) against the rack plate (14) so as to in the traveling operation fix the latter in an immovable manner on the casing unit (2) such that a displacement of the casing tube (1) in relation to the casing unit (2) in the crash event is possible only by activating the energy absorption device (16, 17, 21, 22, 27).

4. The steering column as claimed in one of the preceding claims, **characterized in that** the deformation strips (16, 17) are disposed on top of one another, wherein a second deformation strip (17) that lies closer to the casing tube (1) is configured so as to be wider than the first deformation strip (16) that is disposed on the second deformation strip (17), **in that** the second deformation slide (22) that is disposed on the second deformation strip (17) is wider than the first deformation slide (21) that is disposed on the first deformation strip (16), such that said second deformation slide (22) encompasses both deformation strips (16, 17) but jams only the second deformation strip (17), and **in that** the first deformation slide (21) encompasses and jams only the first deformation strip (16).

5. The steering column as claimed in claim 4, **characterized in that** the deformation strips (16, 17) are held at a mutual spacing by spacers (31) and in the radial direction (35) are fixed between the casing tube (1) and the rack plate (14).

6. The steering column as claimed in claim 5, **characterized in that** the spacers (31) are disposed on the second deformation strip (17).

7. The steering column as claimed in claim 5, **characterized in that** the spacers (31) are disposed both on the upper side (30) of the second deformation strip (17) that faces the first deformation strip (16) as well as on the lower side (29) of the second deformation strip (17) that faces the casing tube (1).

8. The steering column as claimed in one of claims 5 to 7, **characterized in that** the spacers are designed as studs (31) or a web, and are molded in the second deformation strip (17).

## Revendications

1. Colonne de direction pour un véhicule automobile, comprenant un tube d'enveloppe intérieur (1) qui supporte à rotation un arbre de direction (4), et une unité d'enveloppe extérieure (2), qui peut être connectée au châssis du véhicule et dans laquelle le tube d'enveloppe intérieur (1) est reçu et peut être fixé de manière déplaçable dans la direction axiale (3) ; un dispositif d'absorption d'énergie (16, 17, 21, 22, 27) disposé fonctionnellement entre le tube d'enveloppe (1) et l'unité d'enveloppe (2), dans lequel une partie de l'énergie produite en cas de collision peut être absorbée lorsque le tube d'enveloppe (1) est coulissé de manière télescopique par rapport à l'unité d'enveloppe (2), **caractérisée en ce que** le dispositif d'absorption d'énergie (16, 17, 21, 22, 27) présente au moins deux bandes de déformation (16, 17) fixées au tube d'enveloppe (1), sur lesquelles est disposé un coulisseau de déformation (21, 22) respectif connecté à l'unité d'enveloppe (2), lequel vient en prise autour des côtés étroits extérieurs de la bande de déformation respective (16, 17) et l'enserre, **en ce que** celui-ci déforme la bande de déformation respective (16, 17), lorsque, dans le cas d'une collision, la bande de déformation (16, 17) est coulissée dans la direction axiale (3) par rapport au coulisseau de déformation (21, 22), et **en ce qu'**une connexion (23, 24) entre un premier coulisseau de déformation (21) et l'unité d'enveloppe (2) ou entre le premier élément de déformation (21) et un deuxième élément de déformation (22) peut être desserrée ou établie au moyen d'un dispositif de commutation (27).

2. Colonne de direction selon la revendication 1, **caractérisée en ce que** le dispositif de commutation est un commutateur pyrotechnique (27).

3. Colonne de direction selon la revendication 1 ou 2, **caractérisée en ce que** les coulisseaux de déformation (21, 22) sont connectés à l'unité d'enveloppe extérieure (2) par le biais d'une plaque dentée (14), **en ce qu'**un élément de blocage (15) muni de dents est connecté à l'unité d'enveloppe extérieure (2) par le biais d'un dispositif de serrage (10) qui presse l'élément de blocage (15) contre la plaque dentée (14) afin de fixer celle-ci en mode de conduite de manière inamovible sur l'unité d'enveloppe (2) de telle sorte qu'un coulissement du tube d'enveloppe (1) par rapport à l'unité d'enveloppe (2) en cas de collision ne soit possible que sous l'effet de l'actionnement du dispositif d'absorption d'énergie (16, 17, 21, 22, 27) .

4. Colonne de direction selon l'une quelconque des revendications précédentes, **caractérisée en ce que** les bandes de déformation (16, 17) sont disposées l'une au-dessus de l'autre, une deuxième bande de déformation (17) située plus près du tube d'enveloppe (1) étant plus large que la première bande de déformation (16) disposée sur la deuxième bande de déformation (17), **en ce que** le deuxième coulisseau de déformation (22) disposé sur la deuxième bande de déformation (17) est plus large que le premier coulisseau de déformation (21) disposé sur la première bande de déformation (16), de telle sorte que celui-ci vienne en prise autour des deux bandes de déformation (16, 17), mais enserre seulement la deuxième bande de déformation (17) ; et
**en ce que** le premier coulisseau de déformation (21) enserre et vient en prise autour de seulement la bande de déformation supérieure (16).

5. Colonne de direction selon la revendication 4, **caractérisée en ce que** les bandes de déformation (16, 17) sont maintenues espacées l'une de l'autre par des éléments d'espacement (31) et sont fixées dans la direction radiale (35) entre le tube d'enveloppe (1) et la plaque dentée (14).

6. Colonne de direction selon la revendication 5, **caractérisée en ce que** les éléments d'espacement (31) sont disposés au niveau de la deuxième bande de déformation (17).

7. Colonne de direction selon la revendication 5, **caractérisée en ce que** les éléments d'espacement (31) sont disposés à la fois sur le côté supérieur (30) tourné vers la première bande de déformation (16) et sur le côté inférieur (29) de la deuxième bande de déformation (17) tourné vers le tube d'enveloppe (1).

8. Colonne de direction selon l'une quelconque des revendications 5 à 7, **caractérisée en ce que** les éléments d'espacement sont réalisés sous forme de picots (31) ou de nervures et sont formés dans la deuxième bande de déformation (17).
